# EUROPÄISCHE PATENTSCHRIFT

(11) **EP 0 709 609 B1**
(45) Veröffentlichungstag und Bekanntmachung des Hinweises auf die Patenterteilung: **01.07.1998**
(21) Anmeldenummer: 95114395.7
(22) Anmeldetag: 13.09.1995
(51) Int. Cl.: F16L 3/137, F16L 3/233

(54) **Haltevorrichtung aus Kunststoff**
Holding device made of plastics
Dispositif de retenue en matière plastique

(30) Priorität: 25.10.1994 FR 9412733
(43) Veröffentlichungstag der Anmeldung: 01.05.1996
(73) Patentinhaber: TRW CARR FRANCE SNC, 67340 Ingwiller (FR)
(72) Erfinder: Doré, Pascal, F-67500 Haguenau (FR)
(74) Vertreter: Schieschke, Klaus, Dipl.-Ing.

(56) Entgegenhaltungen:
- DE-A- 1 810 515
- DE-A- 3 617 911
- DE-A- 4 200 771
- FR-A- 2 380 456
- GB-A- 2 185 517
- US-A- 5 042 958
- US-A- 5 131 613

## Beschreibung

Die Erfindung bezieht sich auf eine Haltevorrichtung aus Kunststoff für mindestens einen rohrförmigen Gegenstand, insbesondere Kabel oder Rohr, mit einem an einem Träger befestigbaren Befestigungsbereich, einem Lagerbereich zur Abstützung des zu halternden rohrförmigen Gegenstandes und einem Haltebereich zur Aufnahme und Arretierung eines Umschlingungsbandes, wobei das Umschlingungsband Rastelemente aufweist, die in mindestens eine am Haltebereich angeordnete Gegenrast einlagerbar sind.

Als Stand der Technik ist bereits eine derartige Haltevorrichtung bekannt (EP 0 420 452 A1). Diese Vorrichtung ist so ausgebildet, daß die Rastelemente Stege sind, welche sich an einer federnden Zunge der Gegenrast abstützen. Die zu halternden rohrförmigen Gegenstände legen sich gegen einen Teil der Seitenwandung des Befestigungsbereichs an. Der Halteeffekt für die zu befestigenden Rohre ist damit relativ gering; es muß immer sichergestellt werden, daß die Rohre insgesamt einwandfrei von dem Umschlingungsband so umschlossen werden, daß nicht ein unerwünschtes Herausziehen möglich ist.

Eine andere Haltevorrichtung aus Kunststoff zur Halterung von rohrförmigen Gegenständen ist so gestaltet, daß der Befestigungsbereich eine flache Oberseite aufweist, auf welcher sich die zu halternden Rohre zumindest teilweise auflagern (DE-OS 1810515). Auch hier kann sich die unerwünschte Möglichkeit ergeben, daß die zu halternden rohrförmigen Gegenstände nicht verschiebesicher von dem Umschlingungsband gehaltert werden.

Weiterer Stand der Technik sind Befestigungselemente zur Halterung von Rohren unterschiedlichen Durchmessers (DE-OS 36 17 911 A1, DE-OS 28 07 119, DE-OS 36 17 911 A1, US-PS 4,635,886, GB PS 309,826, DE-OS 38 22 752). Allen diesen Befestigungselementen ist gemeinsam, daß sie innenseitig mindestens einen federnden Steg aufweisen, um Rohre verschiedenen Durchmessers zu haltern.

Trotzdem ist der Anwendungsbereich dieser bekannten Befestigungselemente begrenzt.

Als Stand der Technik, von dem die vorliegende Erfindung ausgeht, ist eine Haltevorrichtung mit Befestigungsbereich, Lagerbereich und Haltebereich bekannt (US-A-5 131 613). Bei dieser Konstruktion ist vorgesehen, Rohre auch unterschiedlichen Durchmessers mit einer äußeren Umhüllung zu versehen, wonach diese gesamte Einheit mit Hilfe des Umschlingungsbandes an der Haltevorrichtung befestigt wird. Auch bei dieser bekannten Konstruktion sind die rohrförmigen Gegenstände bezüglich ihrer Halterung davon abhängig, wie fest das Umschlingungsband in der Gegenrast eingelagert ist.

Der vorliegenden Erfindung liegt demgegenüber die Aufgabe zugrunde, eine Haltevorrichtung der eingangs genannten Art zu schaffen, welche bei einfachem konstruktivem Aufbau in der Lage ist, auch Rohre unterschiedlichen Durchmessers einwandfrei so zu haltern, daß sie nicht aus dem Umschlingungsband herausgezogen werden können. Insbesondere soll diese Haltevorrichtung zur Halterung von Kabeln oder Rohren auf dem Kraftfahrzeugsektor dienen, wo erfahrungsgemäß erhebliche mechanische Einwirkungen auftreten können und ein Toleranzausgleich wichtig ist.

Diese Aufgabe wird erfindungsgemäß dadurch gelöst, daß der Lagerbereich beidseitig des Befestigungsbereiches je eine federnde Halbschale sowie Lagerrippen aufweist, daß das Umschlingungsband nahe dem Befestigungsbereich mit mindestens einer dem Lagerbereich zugekehrten, den Außenumfang des zu halternden Gegenstands beaufschlagenden Arretierrippe versehen ist und daß ein erster Bereich der Rastelemente unterseitig und ein zweiter Bereich der Rastelemente oberseitig auf dem Umschlingungsband angeordnet sind.

Hierdurch ergibt sich der Vorteil, daß das Umschlingungsband auch Rohre unterschiedlichen Durchmessers einwandfrei und sicher in der erfindungsgemäßen Haltevorrichtung haltert; die rohrförmigen Gegenstände können nicht in unerwünschter Weise aus ihrer Halteposition herausgezogen werden. Durch das Zusammenwirken der federnden Halbschalen, der Lagerrippen und der Arretierrippen, ergibt sich eine sehr gute Halterung der zu befestigenden rohrförmigen Gegenstände.

Dadurch, daß die Rastelemente in zwei Bereiche aufgeteilt sind, lassen sich darüber hinaus Rohre im sehr weiten Durchmesserbereich effektiv mit Hilfe der Haltevorrichtung an einem Träger befestigen.

Vorteilhafte Weiterbildungen ergeben sich aus den Unteransprüchen.

Die Erfindung wird nachfolgend anhand eines in der Zeichnung dargestellten Ausführungsbeispiels näher beschrieben. In der Zeichnung zeigen:
Fig. 1 eine Seitenansicht der erfindungsgemäßen Haltevorrichtung mit geöffnetem Umschlingungsband.
Fig. 2 die Draufsicht auf die Haltevorrichtung nach Fig. 1.
Fig. 3 eine Vorderansicht der erfindungsgemäßen Haltevorrichtung nach Figur 1 und 2.

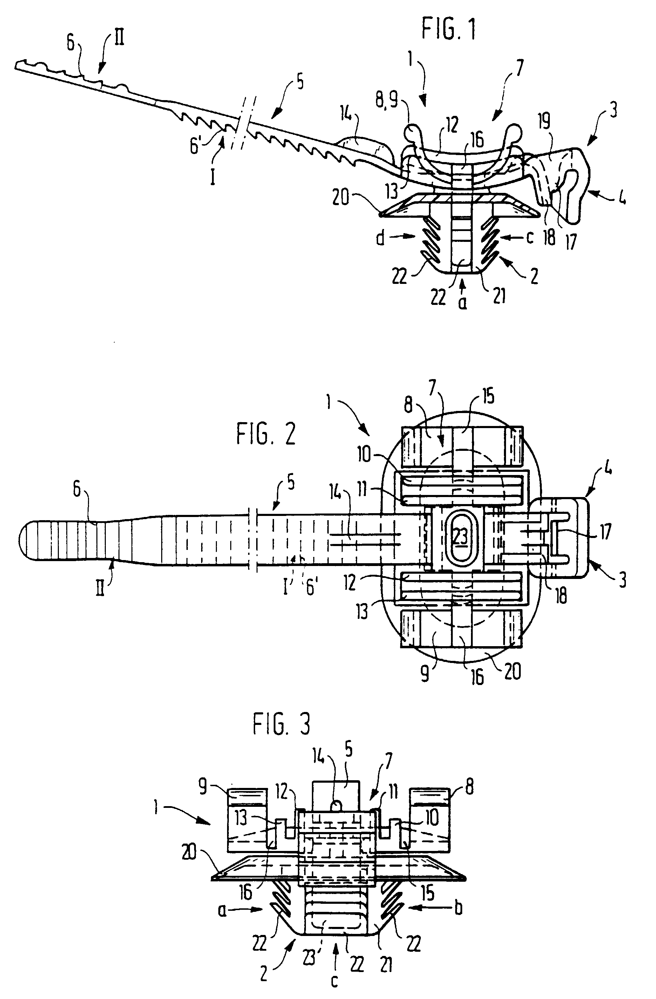

Nach den Figuren 1 bis 3 weist die aus Kunststoff bestehende Haltevorrichtung 1 im wesentlichen einen an einem nicht näher dargestellten Träger befestigbaren Befestigungsbereich 2 sowie einen Lagerbereich 7 zur Abstützung mindestens eines ebenfalls nicht näher dargestellten, zu halternden rohrförmigen Gegenstandes auf.

Weiterhin ist ein Haltebereich 3 vorgesehen, welcher zur Aufnahme und Arretierung eines den rohrförmigen Gegenstand umschlingenden Umschlingungsbandes 5 dient. Das Umschlingungsband 5 besitzt Rastelemente 6,6', welche in mindestens eine am Haltebereich 3 angeordnete Gegenrast 4 einlagerbar sind.

Insbesondere aus Fig. 1 und 3 geht hervor, daß der Lagerbereich 7 beidseitig des Befestigungsbereiches 2 je eine federnde Halbschale 8,9 aufweist. Beim Umschlingen des zu halternden rohrförmigen Gegenstandes wird dieser oder werden z.B. mehrere Rohre gegen diese Halbschalen 8 und 9 gedrückt und bewirken infolge der federnden Anlage eine sehr effektive Befestigung innerhalb der erfindungsgemäßen Haltevorrichtung.

Der Lagerbereich 7 weist darüber hinaus Lagerrippen 10,11,12 und 13 auf. Insbesondere aus Fig. 2 und 3 ist ersichtlich, daß jeweils zwischen einer federnden Halbschale 8 und 9 und dem Befestigungsbereich 2 zwei gewölbte Lagerrippen 10 und 11 bzw. 12 und 13 angeordnet sind. Die der jeweiligen Halbschale 8 und 9 benachbarte Lagerrippe 10 und 13 besitzt hierbei eine geringere Höhe als die dem Befestigungsbereich zugekehrte Lagerrippe 11 und 12. Diese Lagerrippen sind damit in der Lage, abstützend auf den vom Umschlingungsband 5 umschlungenen rohrförmigen Gegenstand zu wirken, so daß dieser eine zusätzliche Lagerung erfährt.

Vom Lagerbereich 7 erstreckt sich, wie insbesondere aus Fig. 2 und 3 zu ersehen ist, achsparallel zu dem zu halternden Gegenstand jeweils ein Steg 15 und 16 über die beiden Lagerrippen 10 und 11 bzw. 12 und 13 bis zu den federnden Halbschalen 8 und 9. Hierbei ist aus Fig. 3 ersichtlich, daß sich der Steg 15 bzw. 16 bis zu den Halbschalen 8,9 verjüngt, also konisch bis zu seinem Endbereich zuläuft. In der Nähe der Mitte des Lagerbereiches 7 verläuft die Oberseite des jeweiligen Steges 15 bzw. 16 nicht geneigt, sondern in einer waagerechten Ebene.

Das Umschlingungsband 5 ist nach Fig. 1 und 2 nahe dem Befestigungsbereich 2 mit mindestens einer dem Lagerbereich 7 zugekehrten, den Außenumfang des zu halternden Gegenstandes beaufschlagenden Arretierrippe 14 versehen. Beim Umschlingen des zu halternden rohrförmigen Gegenstandes oder z.B. mehrerer Kabelbänder beaufschlagt die Oberseite der Arretierrippe 14 bereichsweise den Außenumfang dieser zu halternden Kabelbänder und bewirkt zusammen mit dem geschlossenen Umschlingungsband 5 eine sehr gute Halterung und Befestigung.

Dieses Umschlingungsband 5 weist darüber hinaus einen ersten Bereich I auf, auf welcher Rastelemente 6' unterseitig angeordnet sind. Diesem ersten Bereich I schließt sich ein zweiter Bereich II an, auf welchem Rastelemente 6 oberseitig auf dem Umschlingungsband angeordnet sind. Aus Fig. 2 ist erkennbar, daß der erste Bereich I der Rastelemente 6' breiter als der daran anschließende zweite Bereich II der Rastelemente 6 ist.

Aus Fig. 1 und 2 ist ersichtlich, daß die Gegenrast 4 eine federnde Zunge 17 zur Arretierung der Rastelemente 6' des ersten Bereiches I besitzt. Der federnden Zunge 17 gegenüberliegend ist ein Rastbereich 18 angeordnet, welcher zur Arretierung der Rastelemente 6 des zweiten Bereichs II dient. Insbesondere aus Fig. 1 ist erkennbar, daß die federnde Zunge 17 und der Rastbereich 18 am Ende einer trichterförmig zulaufenden Einschubzone 19 der Gegenrast 4 angeordnet sind. Diese trichterförmig zulaufende Einschubzone 19 dient zur Montageerleichterung beim Einführen des Umschlingungsbandes 6 in die Gegenrast 4.

Aus Fig. 1 und 3 ist erkennbar, daß der Befestigungsbereich 2 unterhalb des Lagerbereichs 7 eine umlaufende, federnde Dichtlippe 20 aufweist, welche von dem Lagerbereich 7 weggerichtet ist. Die Dichtlippe 20 ist bei dem dargestellten Ausführungsbeispiel länglich ausgebildet. Es besteht jedoch auch die Möglichkeit, diese Dichtlippe kreisförmig oder oval zu gestalten.

Aus Fig. 1 und 3 geht hervor, daß der Befestigungsbereich 2 am Außenumfang eines Grundkörpers 21 federnde Halterippen 22 aufweist. Diese Halterippen 22 sind in mehrere Abschnitte a bis c aufgeteilt. Hierbei können diese Abschnitte unterschiedliche Breite aufweisen; beispielsweise sind die Abschnitte a und b schmaler als die Abschnitte c und d.

Aus Fig. 1 und 3 ist darüber hinaus erkennbar, daß der Grundkörper 21, vom Lagerbereich 7 ausgehend, eine unterseitig abgeschlossene Ausnehmung 23 aufweist. Hierdurch ergibt sich eine sehr gute federnde Wirkung des Befestigungsbereiches 2, so daß sich die federnden Halterippen 22 wirkungsvoll gegen die Innenwandung einer nicht näher dargestellen Öffnung eines Trägers anlegt bzw. diese hintergreift. Durch diese federnde Wirkung der Halterippen 22 im Zusammenwirken mit der Ausnehmung 23 ergibt sich eine sehr gute Befestigung der Haltevorrichtung 1 an einem nicht näher dargestellten Träger.

Der länglich ausgebildete Befestigungsbereich 2 und die unterschiedlich breiten Abschnitte a bis c der Halterippen können entweder quer oder längs zu dem Verlauf des Umschlingungsbandes 5 angeordnet sein. Bei dem dargestellten Ausführungsbeispiel liegt der länglich ausgebildete Befestigungsbereich 2 quer, d.h. um 90° gedreht, zu dem Verlauf des Umschlingungsbandes 5.

Statt der Gestaltung des Befestigungsbereiches 2 mit federnden Halterippen 22 ist es auch möglich, diesen Befestigungsbereich als Zapfen mit einer Innenausnehmung auszubilden, wobei sich beispielsweise ein sogenannter Tannenbaumbolzen, welcher auf einem Träger durch Schweißung befestigt ist, im Innern der vorzugsweise mit Rippen versehenen Ausnehmung des Befestigungsbereichs 2 einlagern kann.

Insgesamt ergibt sich eine Haltevorrichtung 1 aus Kunststoff, welche sehr effektiv in der Lage ist, einen oder mehrere rohrförmige Gegenstände mit Hilfe des Umschlingungsbandes 5 und des Lagerbereiches 7 so zu haltern, daß ein unerwünschtes Lösen auch bei höheren Belastungen vermieden wird. Außerdem lassen sich Rohre unterschiedlichen Durchmessers in einem großen Toleranzbereich einwandfrei haltern.

## Patentansprüche

1. Haltevorrichtung (1) aus Kunststoff für mindestens einen rohrförmigen Gegenstand, insbesondere Kabel oder Rohr,
mit einem an einem Träger befestigbaren Befestigungsbereich (2),
einem Lagerbereich (7) zur Abstützung des zu halternden, rohrförmigen Gegenstandes und
einem Haltebereich (3) zur Aufnahme und Arretierung eines, den rohrförmigen Gegenstand umschlingenden Umschlingungsbandes (5), wobei das Umschlingungsband (5) Rastelemente (6,6') aufweist, welche in mindestens eine am Haltebereich (3) angeordnete Gegenrast (4) einlagerbar sind,
dadurch gekennzeichnet,
daß der parallel zum Umschlingüngsband (5) verlaüfende Lagerbereich (7) beidseitig des Befestigungsbereiches (2) je eine federnde Halbschale (8,9) sowie Lagerrippen (10,11,12,13) aufweist,
daß das Umschlingungsband (5) nahe dem Befestigungsbereich (2) mit mindestens einer dem Lagerbereich (7) zugekehrten, in Längsrichtung des Umschlingungsbandes (5) liegende den Außenumfang des zu halternden Gegenstandes beaufschlagenden Arretierrippe (14) versehen ist und
daß ein erster Bereich (I) der Rastelemente (6') unterseitig und ein zweiter Bereich (II) der Rastelemente (6) oberseitig auf dem Umschlingungsband (5) angeordnet sind.

2. Haltevorrichtung nach Anspruch 1,
dadurch gekennzeichnet, daß jeweils zwischen einer federnden Halbschale (8,9) und dem Befestigungsbereich (2) zwei gewölbte Lagerrippen (10,11;12,13) angeordnet sind, wobei die der jeweiligen Halbschale (8,9) benachbarte Lagerrippe (10,13) eine geringere Höhe aufweist als die dem Befestigungsbereich (2) zugekehrter Lagerrippe (11,12).

3. Haltevorrichtung anch Anspruch 1 und 2,
dadurch gekennzeichnet, daß sich vom Befestigungsbereich (2) achsparallel zu dem halternden Gegenstand jeweils ein Steg (15,16) über die beiden Lagerrippen (10,11;12,13) bis zu den federnden Halbschalen (8,9) erstreckt, welcher sich bis zu den Halbschalen (8,9) verjüngt.

4. Haltevorrichtung nach einem der vorhergehenden Ansprüche,
dadurch gekennzeichnet, daß der erste Bereich (I) der Rastelemente (6') breiter als der daran anschließende zweite Bereich (II) der Rastelemente (6) ist.

5. Haltevorrichtung nach Anspruch 1 und 4,
dadurch gekennzeichnet, daß die Gegenrast (4) eine federnde Zunge (17) zur Arretierung der Rastelemente (6') des ersten Bereichs (I) und - dieser gegenüberliegend - mindestens einen Rastbereich (18) zur Arretierung der Rastelemente (6) des zweiten Bereiches (II) aufweist.

6. Haltevorrichtung nach Anspruch 5,
dadurch gekennzeichnet, daß die federnde Zunge (17) und der Rastbereich (18) am Ende einer trichterförmig zulaufenden Einschubzone (19) der Gegenrast (4) angeordnet sind.

7. Haltevorrichtung nach einem der vorhergehenden Ansprüche,
dadurch gekennzeichnet, daß der Befestigungsbereich (2) unterhalb des Lagerbereiches (7) mindestens eine umlaufende, federnde Dichtlippe (20) aufweist, welche kreisförmig, oval oder länglich ausgebildet ist.

8. Haltevorrichtung nach Anspruch 1 und 7,
dadurch gekennzeichnet, daß der Befestigungsbereich (2) am Außenumfang eines Grundkörpers (21) federnde Halterippen (22) aufweist, welche in mehrere Abschnitte (a,b,c,d) aufgeteilt sind.

9. Haltevorrichtung nach Anspruch 8,
dadurch gekennzeichnet, daß die Abschnitte (a,b,c,d) unterschiedliche Breite aufweisen, wobei jeweils gegenüberliegende Abschnitte (a,b;c,d) die gleiche Breite besitzen.

10. Haltevorrichtung nach den Ansprüchen 8 und 9,
dadurch gekennzeichnet, daß der Grundkörper (21) - vom Lagerbereich (7) ausgehend - eine unterseitig abgeschlossene Ausnehmung (23) aufweist.

11. Haltevorrichtung nach einem der vorhergehenden Ansprüche,
dadurch gekennzeichnet, daß der länglich ausgebildete Befestigungsbereich (2) und/oder die unterschiedlich breiten Abschnitte (a,b,c,d) der Halterippen (22) entweder quer oder längs zu dem Verlauf des Umschlingungsbandes (5) angeordnet sind.

## Claims

1. Holding device (1) made of plastic for at least one tubular object, in particular a cable or pipe, having an attachment region (2) which can be attached to a support,
a bearing region (7) for supporting the tubular object to be held, and
a holding region (3) for accommodating and retaining a wrap-around belt (5) which wraps around the tubular object, the wrap-around belt (5) having latching elements (6,6') which can be introduced into at least one mating catch (4) arranged on the holding region (3),
characterized
in that the bearing region (7), which runs parallel to the wrap-around belt (5), has on both sides of the attachment region (2) in each case a resilient half-shell (8,9) as well as bearing ribs (10,11,12,13),
in that the wrap-around belt (5) is provided, close to the attachment region (2), with at least one retaining rib (14) which faces the bearing region (7), lies in the longitudinal direction of the wrap-around belt (5) and acts on the outer circumference of the object to be held, and
in that a first region (I) of the latching elements (6') is arranged on the underside of the wrap-around belt (5) and a second region (II) of the latching elements (6) is arranged on the top side of the wrap-around belt (5).

2. Holding device according to Claim 1, characterized in that two curved bearing ribs (10,11;12,13) are in each case arranged between a resilient half-shell (8,9) and the attachment region (2), the bearing rib (10,13) which is adjacent to the respective half-shell (8,9) having a lower height than the bearing rib (11,12) facing the attachment region (2).

3. Holding device according to Claims 1 and 2, characterized in that in each case one web (15,16) extends, from the attachment region (2), axially parallel to the object to be held, across the two bearing ribs (10,11;12,13) as far as the resilient half-shells (8,9), which web tapers towards the half-shells (8,9).

4. Holding device according to one of the preceding claims, characterized in that the first region (I) of the latching elements (6') is wider than the adjoining second region (II) of the latching elements (6).

5. Holding device according to Claims 1 and 4, characterized in that the mating catch (4) has a resilient tongue (17) for retaining the latching elements (6') of the first region (I) and - opposite this tongue - at least one catch region (18) for retaining the latching elements (6) of the second region (II).

6. Holding device according to Claim 5, characterized in that the resilient tongue (17) and the catch region (18) are arranged at the end of a push-in zone (19), which narrows in the shape of a funnel, of the mating catch (4).

7. Holding device according to one of the preceding claims, characterized in that the attachment region (2) has at least one encircling, resilient sealing lip (20), which is of circular, oval or elongate design, beneath the bearing region (7).

8. Holding device according to Claims 1 and 7, characterized in that the attachment region (2) has resilient holding ribs (22) on the outer circumference of a base body (21), which holding ribs are divided into a plurality of sections (a,b,c,d).

9. Holding device according to Claim 8, characterized in that the sections (a,b,c,d) have different widths, mutually opposite sections (a,b;c,d) having the same width.

10. Holding device according to Claims 8 and 9, characterized in that the base body (21) - starting from the bearing region (7) - has a recess (23) which is closed on the underside.

11. Holding device according to one of the preceding claims, characterized in that the attachment region (2), which is of elongate design, and/or the sections (a,b,c,d), which are of different widths, of the holding ribs (22) are arranged either transversely or longitudinally with respect to the extent of the wrap-around belt (5).

## Revendications

1. Dispositif de retenue (1) en matière plastique pour au moins un objet tubulaire, notamment un câble ou un tuyau, comprenant une zone de fixation (2) pouvant être fixée à un support,
une zone de portée (7) pour procurer un appui à l'objet tubulaire devant être retenu, et
une zone de retenue (3) destinée à recevoir et à arrêter un ruban d'enlacement (5) ceinturant l'objet tubulaire, le ruban d'enlacement (5) présentant des éléments encliquetables (6, 6') qui peuvent venir se nicher dans au moins un élément d'encliquetage complémentaire (4), disposé sur la zone de retenue (3),
caractérisé par le fait
que la zone de portée (7) s'étendant parallèlement au ruban d'enlacement (5) comporte, de part et d'autre de la zone de fixation (2), une demi-coquille élastique respective (8, 9) ainsi que des nervures de montage (10, 11, 12, 13) ;
que le ruban d'enlacement (5) est pourvu, à proximité de la zone de fixation (2), d'au moins une nervure d'arrêt (14) qui est tournée vers la zone de portée (7), est située dans la direction longitudinale du ruban d'enlacement (5), et sollicite le pourtour extérieur de l'objet à retenir ; et
qu'une première région (I) des éléments encliquetables (6') et une seconde région (II) des éléments encliquetables (6) sont disposées sur le ruban d'enlacement (5), respectivement à la face inférieure et à la face supérieure.

2. Dispositif de retenue selon la revendication 1, caractérisé par le fait que deux nervures bombées de montage (10, 11 ; 12, 13) sont respectivement interposées entre une demi-coquille élastique (8, 9) et la zone de fixation (2), la nervure de montage (10, 13), voisine de la demi-coquille considérée (8, 9), présentant une plus faible hauteur que la nervure de montage (11, 12) tournée vers la zone de fixation (2).

3. Dispositif de retenue selon les revendications 1 et 2,
caractérisé par le fait qu'une membrure (15, 16), s'étendant respectivement sur les deux nervures de montage (10, 11 ; 12, 13) jusqu'aux demi-coquilles élastiques (8, 9) à partir de la zone de fixation (2), avec parallélisme axial vis-à-vis de l'objet à retenir, se rétrécit jusqu'auxdites demi-coquilles (8, 9).

4. Dispositif de retenue selon l'une des revendications précédentes,
caractérisé par le fait que la première région (I) des éléments encliquetables (6') est plus large que la seconde région (II), attenante, des éléments encliquetables (6).

5. Dispositif de retenue selon les revendications 1 et 4,
caractérisé par le fait que l'élément d'encliquetage complémentaire (4) comprend une languette élastique (17) en vue d'arrêter les éléments encliquetables (6') de la première région (I) et - en vis-à-vis de ladite languette - au moins une région d'encliquetage (18) en vue d'arrêter les éléments encliquetables (6) de la seconde région (II).

6. Dispositif de retenue selon la revendication 5,
caractérisé par le fait que la languette élastique (17) et la région d'encliquetage (18) se trouvent à l'extrémité d'une zone d'insertion (19), convergeant en forme d'entonnoir, de l'élément d'encliquetage complémentaire (4).

7. Dispositif de retenue selon l'une des revendications précédentes,
caractérisé par le fait que la zone de fixation (2) présente, au-dessous de la zone de portée (7), au moins une lèvre élastique périphérique d'étanchement (20) de réalisation circulaire, ovale ou allongée.

8. Dispositif de retenue selon les revendications 1 et 7,
caractérisé par le fait que la zone de fixation (2) comporte, sur le pourtour extérieur d'un corps de base (21), des nervures élastiques de retenue (22) scindées en plusieurs segments (a, b, c, d).

9. Dispositif de retenue selon la revendication 8,
caractérisé par le fait que les segments (a, b, c, d) possèdent une largeur différente, des segments (a, b ; c, d) respectivement opposés possédant la même largeur.

10. Dispositif de retenue selon les revendications 8 et 9,
caractérisé par le fait que le corps de base (21) présente - à partir de la zone de portée (7) - un évidement (23) fermé à la face inférieure.

11. Dispositif de retenue selon l'une des revendications précédentes,
caractérisé par le fait que la zone de fixation (2) de réalisation allongée et/ou les segments différemment larges (a, b, c, d) des nervures de retenue (22) sont agencés soit transversalement, soit longitudinalement par rapport à l'étendue du ruban d'enlacement (5).
